# EUROPEAN PATENT APPLICATION

(11) **EP 2 645 549 A1**
(43) Date of publication of application: **02.10.2013**
(21) Application number: 12290112.7
(22) Date of filing: 30.03.2012
(51) Int. Cl.: H02K 15/00, H02K 3/50

(54) **Electric machine and assembling method**

(71) Applicant: Alstom Technology Ltd., 5400 Baden (CH)
(72) Inventor: Clemence, Laurent Didier Jean, 90400 Danjoutin (FR); Braun, Yves, 68800 Roderen (FR)

(57) **Abstract**

The electric machine (1) comprises a stator (3) including stator windings (4), the stator windings (4) comprising stator bars (5) connected each other. The electric machine (1) also includes phase rings (6) connected to the stator windings (4) and a rotor (8). The reciprocally connected parts of the stator bars (5) and/or the stator bars (5) and phase rings (6)are connected though a connecting element (12) comprising portions (17) penetrating the parts of the stator bars (5) and/or stator bars (5) and phase rings (6).

## Description

### TECHNICAL FIELD

The present disclosure relates to an electric machine and an assembling method.

The electric machine is in particular a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor or also other types of rotating electric machines.

In particular the disclosure refers to the stator windings and to the connection among them and to phase rings.

### BACKGROUND

Electric machines such as electric generators or electric motors have a stator and a rotor housed in a casing.

The stator has slots that house stator bars; the stator bars are connected each other at their ends to define stator windings (usually three phase windings). The stator windings are also connected to phase rings that are in turn connected to bushings that penetrate the casing to transfer electric power through the casing.

The connection among stator bars and between stator bars and phase rings is usually made by brazing.

This connection proved to be efficient, but it can anyhow cause some problems, for example during maintenance operations.

During maintenance operation in some cases some or all the stator bars that constitute the windings are removed or the phase rings are removed. This requires that some or all the connections among the stator bars and/or between the stator bars and phase rings are removed.

After the maintenance operations, the stator bars are usually replaced with new bars or in some cases the old bars can be reconnected together and/or to the phase rings.

Usually this is done by brazing on the yard (i.e. on the field).

Brazing on the yard could be a troubling operation, because it requires a brazing equipment and supplies of energy and high pressure water that could not be available.

In addition, the brazing equipment can undergo a failure; in this case the brazing operation must be stopped until the brazing equipment is repaired or replaced.

For these reasons brazing on the yard is often a time consuming and expensive operation.

Alternative solutions include screwed connections. These kinds of connection are anyhow very costly, because the bars must be prepared for example by silvering the parts to be connected and strict tolerances are required.

### SUMMARY

An aspect of the disclosure is thus that of providing an electric machine and a method by which the connection of the stator bars together and/or to the phase ring is more time and cost efficient than brazing.

Another aspect of the disclosure is to provide an electric machine and a method by which the connection of the stator bars together and/or to the phase ring has less constrains than those provided by brazing.

A further aspect of the disclosure is to provide an electric machine and a method that are less expensive than existing machines and methods, in particular when compared to those with screwed connections between end windings together and/or with phase ring.

These and further aspects are attained by providing an electric machine and a method in accordance with the accompanying claims.

### BRIEF DESCRIPTION OF THE DRAWINGS

Further characteristics and advantages will be more apparent from the description of a preferred but non-exclusive embodiment of the electric machine and method illustrated by way of non-limiting example in the accompanying drawings, in which:

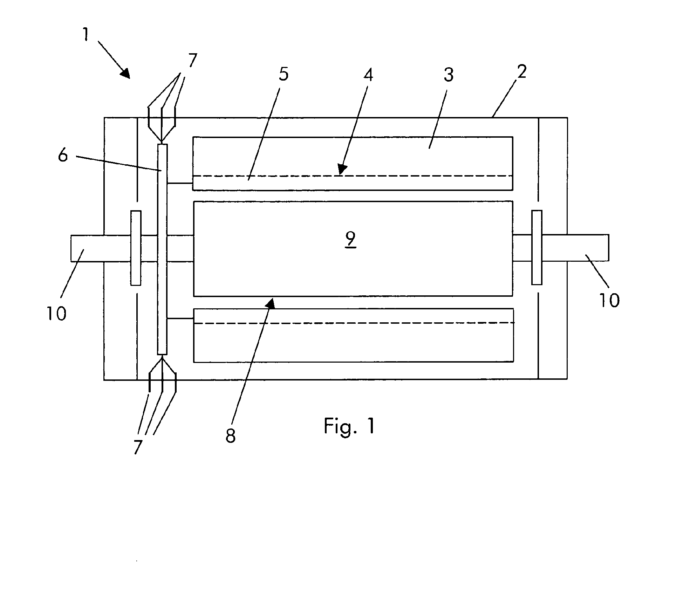

Figure 1 is a schematic view of an electric machine;
Figure 2 shows a particular of an electric machine,
Figure 3 is a view according to arrow V of figure 2,
Figures 4 and 5 show an embodiment of a connecting element;
Figure 6 shows a different embodiment of a connecting element; and
Figure 7 shows a particular of a connecting element connected to stator bars or stator bars and phase rings.

### DETAILED DESCRIPTION OF EXEMPLARY EMBODIMENTS

With reference to the attached figures, a rotating electric machine 1, such as a synchronous or asynchronous electric generator or a synchronous or asynchronous electric motor, comprises a casing 2 that houses a stator 3 including stator windings 4 that comprise stator bars 5 connected each other.

The casing 2 also houses phase rings 6 connected to the stator windings 4 and to bushings 7 that allow electric power transmission through the casing 2.

The casing 2 also houses a rotor 8 having a rotor core 9 and shafts 10 at the ends thereof.

The reciprocally connected parts of the stator bars 5 and/or stator bars 5 and phase rings 6 can be connected though plates 30 and tightening elements 16; other connections are anyhow possible.

The tightening elements 16 can be provided to fix the reciprocally connected parts of the stator bars 5 and/or stator bars 5 and phase rings 6. For example, the tightening elements are bolts.

In addition, connecting elements 12 between the parts connected together are provided.

The connecting elements 12 can include a frame 13 and one or more conductive elements 14 protruding from opposite faces 15a, 15b of the frame 13. The frame 13 protects the conductive element 14 against pollution, resin and putty.

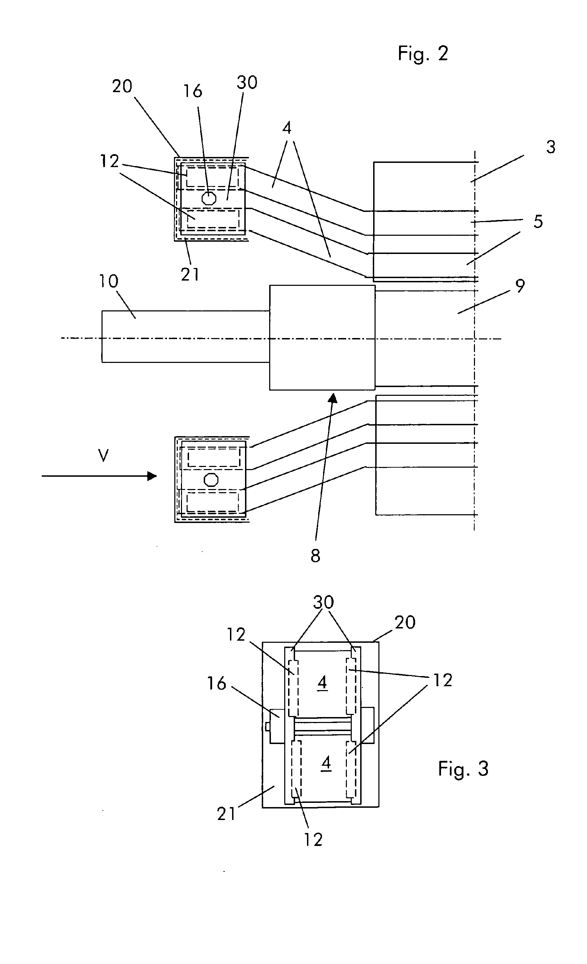

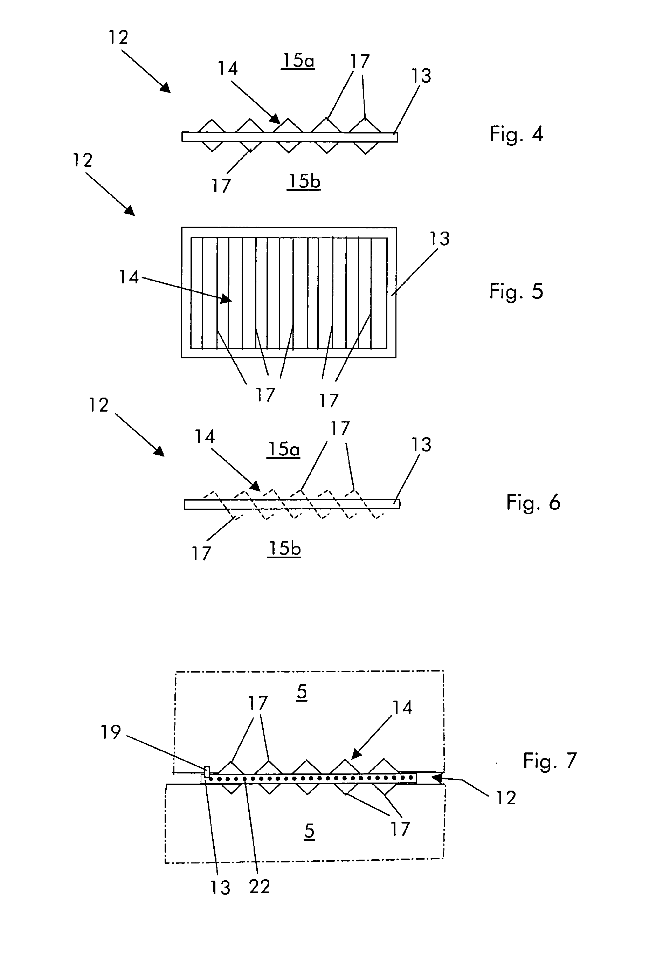

The conductive element 14 can have different structure and shape; for example it can include a single element (figures 3 and 4), or it can include a plurality of elements such as plates one beside the other (figure 5) or any other configuration.

The conductive elements 14 have portions 17 arranged to penetrate and penetrating the parts of the stator bars 5 and/or stator bars 5 and phase rings 6.

The penetrating portions 17 of the conductive elements 14 preferably have a sharp configuration and are harder than the material of the parts of the stator bars 5 and/or the stator bars 5 and phase rings 6. This helps penetration and thus electric contact. For example the material of the penetrating portions 17 can be a copper alloy.

The frame 13 is preferably made out of a plastic material. The plastic material is pressed during assembly and creates a seal that protects the conductive elements 14.

Fixing elements 19 to connect the frame 13 to the parts of the stator bars 5 and/or the stator bars 5 and phase rings 6 can also be provided.

The fixing element 19 can include pins and/or screws. Likewise, the stator bars 5 and/or phase rings 6 can be provided with holes or seats to house a part of the pins and/or screws.

The connected parts (in particular for the stator bars 5) can be protected by covering them with caps 20, and a putty (preferably an electrically insulating putty) can be provided within the caps 20.

In addition, putty 22 (preferably an electrically conductive putty) can be provided within the frame 13 (when the frame is provided) and/or around the conductive elements 14, to improve electric contact and reduce electric resistance between the reciprocally connected parts of the stator bars 5 and/or stator bars 5 and phase rings 6. This feature is anyhow not mandatory.

The operation of the electric machine is apparent from that described and illustrated and is substantially the following.

During maintenance operation the stator bars 5 and/or phase rings or parts thereof are disconnected from one another to replace them and/or to carry out maintenance operations.

When the stator bars 5 and/or phase rings 6 must be connected again (the same or different stator bars can be connected), the connecting elements 12 are first connected to a first stator bar 5 or phase ring 6 via the fixing elements 19 (when provided), then a second stator bar 5 or phase ring 6 is provided beside the first, such that the connecting element 12 rests in-between.

Thus the plates 30 and the tightening elements 16 are provided and finally also the putty 21 and cap 20 are provided. These operations are carried out on the yard (i.e. on the field).

Since the connecting elements 12 guarantee a low electric resistance between the reciprocally connected parts, no high pressure or surface preparation is needed for the parts to be connected together.

When the electric machine 1 is an electric generator (the operation for an electric motor or other kind of electric machine is similar) the rotor 8 rotates and induces electric power into the stator bars 5.

The electric power flows through the stator bars 5 and is supplied to the phase rings 6.

The connection through the connecting elements 12 allows a good electric contact and a low electric resistance. This helps efficiency, because the whole electric power generated has to pass through the stator bars 5 and phase rings 6.

The disclosure also refers to a method for assembling an electric machine.

The method comprises providing the connecting elements 12 between the reciprocally connected parts of the stator bars 5 and/or the stator bars 5 and phase rings 6.

In addition, the plates 30 and tightening elements 16 can also be provided to fix the reciprocally connected parts of the stator bars 5 and/or stator bars 5 and phase rings 6; it is clear that the plates 30 could not be provided; in addition also the plates 30 and/or tightening elements 16 could not be provided according to the particular machine configuration.

Electrically conductive putty 22 can be provided inside the frame 13.

The method can be carried out on the yard during a maintenance outage of the electric machine.

In this case the stator bars 5 and/or phase rings 6 are disconnected first and are then replaced or reconnected on the yard. This is advantageous because the connecting elements 12 allow a very good electric connection without the need of:
- brazing
- preparation of the surfaces to be connected (for example by silvering)
- high contact pressure between the connected parts (i.e. the tightening elements 16 keep the parts together, but they are not requested to apply high pressure between them, i.e. only a limited pressure is needed).

Naturally the features described may be independently provided from one another.

In practice the materials used and the dimensions can be chosen at will according to requirements and to the state of the art.

### REFERENCE NUMBERS

- 1: electric machine
- 2: casing
- 3: stator
- 4: stator winding
- 5: stator bar
- 6: phase ring
- 7: bushing
- 8: rotor
- 9: rotor core
- 10: rotor shaft
- 12: connecting element
- 13: frame
- 14: conductive element
- 15a, 15b: face
- 16: tightening element
- 17: penetrating portion
- 19: fixing element
- 20: cap
- 21: putty
- 22: putty
- 30: plate
- V: view

## Claims

1. An electric machine (1) comprising:
a stator (3) including stator windings (4),
the stator windings (4) comprising stator bars (5) connected each other,
phase rings (6) connected to the stator windings (4),
a rotor (8),
**characterised in that** the reciprocally connected parts of:
the stator bars (5) and/or
the stator bars (5) and phase rings (6) are connected though a connecting element (12) comprising a conductive element (14) with portions (17) penetrating the parts of the stator bars (5) and/or stator bars (5) and phase rings (6).

2. The electric machine (1) of claim 1, **characterised in that** the penetrating portions (17) of the at least a conductive element (14) have a sharp configuration.

3. The electric machine (1) of claim 1, **characterised in that** the material of at least the penetrating portions (17) of the at least a conductive element (14) is harder than the material of the parts of the stator bars (5) and/or the stator bars (5) and phase rings (6).

4. The electric machine (1) of claim 1, **characterised in that** the connecting elements (12) comprise a frame (13).

5. The electric machine (1) of claim 4, **characterised in that** the conductive element (14) protrudes from opposite faces (15a, 15b) of the frame (13).

6. The electric machine (1) of claim 1, **characterised in that** plates (30) are provided to fix the reciprocally connected parts of the stator bars (5) and/or stator bars (5) and phase rings (6).

7. The electric machine (1) of claim 1 or 6, **characterised in that** tightening elements (16) are provided to fix the reciprocally connected parts of the stator bars (5) and/or stator bars (5) and phase rings (6).

8. The electric machine (1) of claim 4, **characterised by** comprising at least a fixing element (19) to connect the frame (13)
to at least a part of a stator bar (5) and/or
to at least one between the stator bars (5) and phase rings (6).

9. The electric machine (1) of claim 8, **characterised in that** the fixing element (19) includes a pin and/or a screw.

10. Method for assembling an electric machine comprising:
a stator (3) including stator windings (4),
the stator windings (4) comprising stator bars (5) connected each other,
phase rings (6) connected to the stator windings (4),
a rotor (8),
the method being **characterised by** providing a connecting element (12) comprising portions (17) penetrating the parts of the stator bars (5) and/or stator bars (5) and phase rings (6).

11. The method of claim 10, **characterised by** providing plates (30) to fix the reciprocally connected parts of the stator bars (5) and/or stator bars (5) and phase rings (6).

12. The method of claim 10, **characterised by** providing tightening elements (16) to fix the reciprocally connected parts of the stator bars (5) and/or stator bars (5) and phase rings (6).

13. The method of claim 10, **characterised by** being carried out on the yard during a maintenance outage of the electric machine (1).

14. The method of claim 10, **characterised by** providing an electrically conductive putty (22) inside the frame (13).
